(19) Europäisches Patentamt / European Patent Office / Office européen des brevets

(11) **EP 3 082 211 A1**

(12) **EUROPEAN PATENT APPLICATION**
published in accordance with Art. 153(4) EPC

(43) Date of publication:
19.10.2016 Bulletin 2016/42

(51) Int Cl.:
*H02J 3/32* (2006.01)          *H02J 3/38* (2006.01)
*H02J 7/35* (2006.01)

(21) Application number: 13898915.7

(22) Date of filing: 10.12.2013

(86) International application number:
PCT/JP2013/083073

(87) International publication number:
WO 2015/087391 (18.06.2015 Gazette 2015/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: The Chugoku Electric Power Co., Inc.
Hiroshima-shi, Hiroshima 730-8701 (JP)

(72) Inventor: NAITO, Masaki
Hiroshima-shi, Hiroshima 730-8701 (JP)

(74) Representative: Osha Liang
2, rue de la Paix
75002 Paris (FR)

(54) **CHARGE/DISCHARGE CONTROL DEVICE, AND PROGRAM**

(57) A charge/discharge control device controls charge and discharge of a storage battery in a consumer. The consumer includes an electric power load, a distributed power supply, and the storage battery. The distributed power supply is configured to supply the load with electric power. The storage battery is coupled to the load and the distributed power supply. The charge/discharge control device includes a first determining device and a first control device. The first determining device is configured to determine whether an amount of power generation of the distributed power supply is larger than an amount of power consumption of the load. The first control device is configured to, when the first determining device determines that the amount of power generation is larger than the amount of power consumption, control charge and discharge of the storage battery so that an economic benefit arising from control of the storage battery to the consumer.

FIG. 11

EP 3 082 211 A1

**Description**

[Technical Field]

The present invention relates to a charge/discharge control device and a program.

[Background Art]

For example, there has been known a charge/discharge device configured to control charge and discharge of a storage battery (for example, Patent Literature 1).

[Citation List]

[Patent Literature]

Patent Literature 1: Japanese Unexamined Patent Application Publication No. 2011-244682

[Summary of Invention]

[Technical Problem]

For example, a charge/discharge device in Patent Literature 1 controls charge and discharge of the storage battery based on the result of comparison between a selling price and a reference price of electric power. Such control of charge and discharge by the charge/discharge device does not consider an economic benefit of a consumer who owns the charge/discharge device. Thus, when the storage battery is charged/discharge by this charge/discharge device, the economic benefit by virtue of charging/discharging the storage battery may not be provided.

[Summary of Invention]

[Solution to Problem]

In order to solve the above-described problems, a primary aspect of the invention is directed to a charge/discharge control device configured to control charge and discharge of a storage battery in a consumer, the consumer including an electric power load, a distributed power supply, and the storage battery, the distributed power supply being configured to supply the electric power load with electric power, the storage battery being coupled to the electric power load and the distributed power supply, the charge/discharge control device including: a first determining device configured to determine whether an amount of power generation of the distributed power supply is larger than an amount of power consumption of the electric power load; and a first control device configured to, when the first determining device determines that the amount of power generation is larger than the amount of power consumption, control charge and discharge of the storage battery so that an economic benefit is brought to the consumer by control of the storage battery.
Other features of the present invention will become apparent from descriptions of the accompanying drawings and of the present specification.

[Advantageous Effects of Invention]

According to the present invention, charge and discharge of a storage battery can be controlled to bring an economic benefit to a consumer.

[Brief Description of the Drawings]

Fig. 1 is a diagram illustrating a distribution system according to a first embodiment of the present invention.
Fig. 2 is a block diagram illustrating hardware of a charge/discharge control device according to the first embodiment of the present invention.
Fig. 3 is a block diagram illustrating the charge/discharge control device according to the first and second embodiments of the present invention.
Fig. 4 is a graph illustrating first price information according to the first embodiment of the present invention.

Fig. 5 is a diagram illustrating the first price information according to the first embodiment of the present invention.

Fig. 6 is a diagram illustrating second price information according to the first embodiment of the present invention.

Fig. 7 is a diagram illustrating a control plan according to the first embodiment of the present invention.

Fig. 8 is a flowchart illustrating an operation of a planning unit according to the first embodiment of the present invention.

Fig. 9 is a conceptual diagram illustrating electric power input to / output from a storage battery according to the first embodiment of the present invention.

Fig. 10 is a diagram illustrating a state of a consumer, control of the storage battery, and the like according to the first embodiment of the present invention.

Fig. 11 is a flowchart illustrating an operation of the charge/discharge control device according to the first embodiment of the present invention.

Fig. 12 is a graph illustrating fourth price information according to a second embodiment of the present invention.

Fig. 13 is a flowchart illustrating an operation of the charge/discharge control device according to the second embodiment of the present invention.

[Description of Embodiments]

At least the following matters will become apparent from descriptions of the present specification and of the accompanying drawings.

[First Embodiment]

=== Distribution System ===

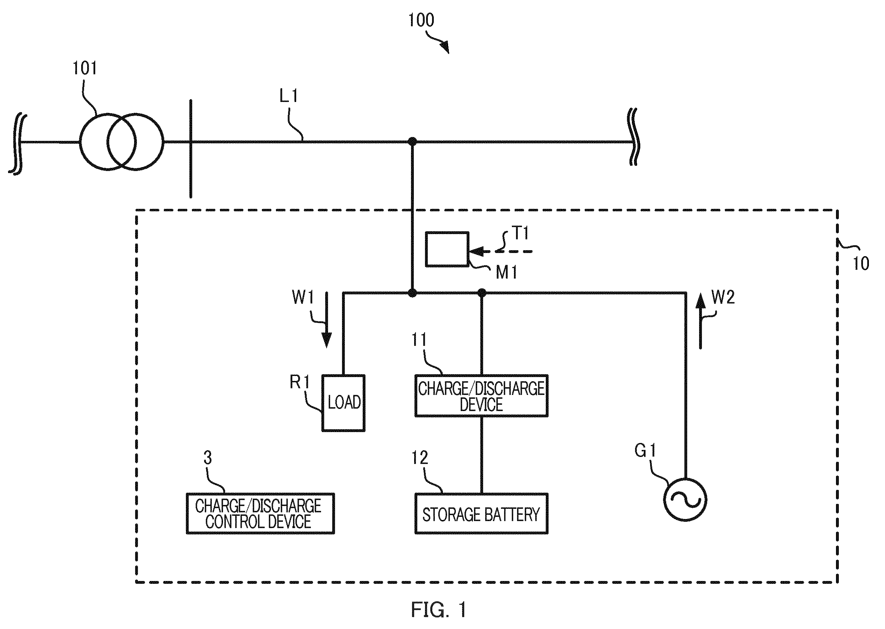

The following describes a distribution system according to an embodiment with reference to Fig. 1. Fig. 1 is a diagram illustrating a distribution system according to an embodiment of the present invention.

A distribution system 100 is an electric power system to supply a consumer 10 with electric power. The distribution system 100 includes a distribution transformer 101, a distribution line L1, and the consumer 10.

To a primary side of the distribution transformer 101, electric power is supplied from an electric generator (not illustrated). To a secondary side of the distribution transformer 101, one end of the distribution line L1 is coupled. The distribution line L1 extends downstream from the upstream one end thereof which is coupled to the secondary side of the distribution transformer 101.

The consumer 10 is, for example, an ordinary household to which electric power is supplied from the distribution line L1 and from which electric power is supplied to the distribution line L1. The consumer 10 includes a measuring device M1, a charge/discharge device 11, a storage battery 12, a load R1, a charge/discharge control device 3, and a distributed power supply G1. Note that the consumer 10 may include a plurality of the loads R1 and the distributed power supplies G1.

The load R1 is an electric power load to which electric power W1 based on the amount of power consumption of the load R1 is supplied.

The measuring device M1 is, for example, a smart meter that measures the supply power supplied from the distribution line L1 to the consumer 10 and measures the electric power supplied from the consumer 10 to the distribution line L1. The measuring device M1 measures the amount of power consumption of the load R1 and the amount of power generation of the distributed power supply G1. The measuring device M1 outputs measurement information indicative of these measurement results. Moreover, the measuring device M1 receives first price information T1 from, for example, an electric power company (not illustrated) and outputs this first price information T1. Note that the details of the first price information T1 will be described later.

The distributed power supply G1 is, for example, a photovoltaic power generation device that outputs electric power W2 based on the amount of power generation and supplies the electric power to the load R1 or the like.

The storage battery 12 is coupled to the distributed power supply G1 and the load R1, and is charged and discharged.

The charge/discharge device 11 is a device that is controlled by the charge/discharge control device 3 so as to charge/discharge the storage battery 12 and stop charging and discharging thereof.

The charge/discharge control device 3 creates a plan T3 for controlling charging and discharging of the storage battery 12 and controls the charge/discharge device 11.

=== Charge/Discharge Control Device ===

The following describes a distribution system of an embodiment of the present invention with reference to Fig.

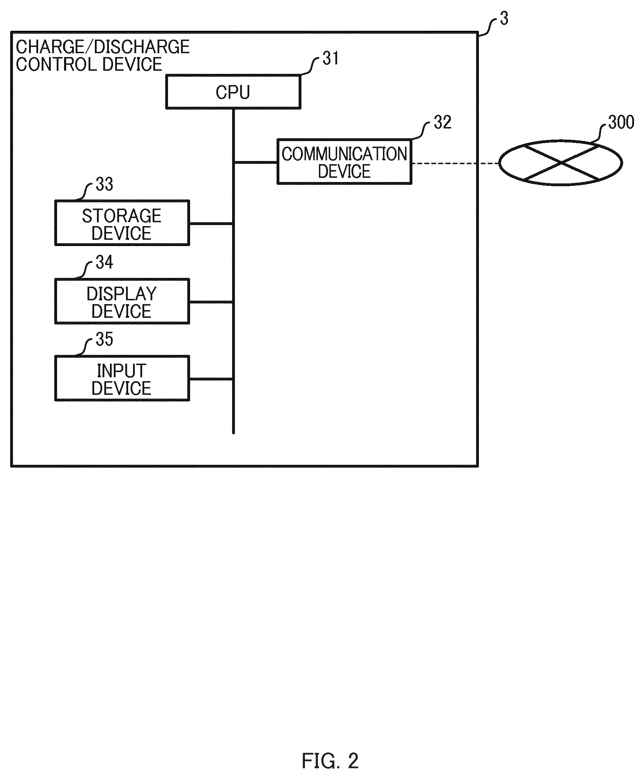

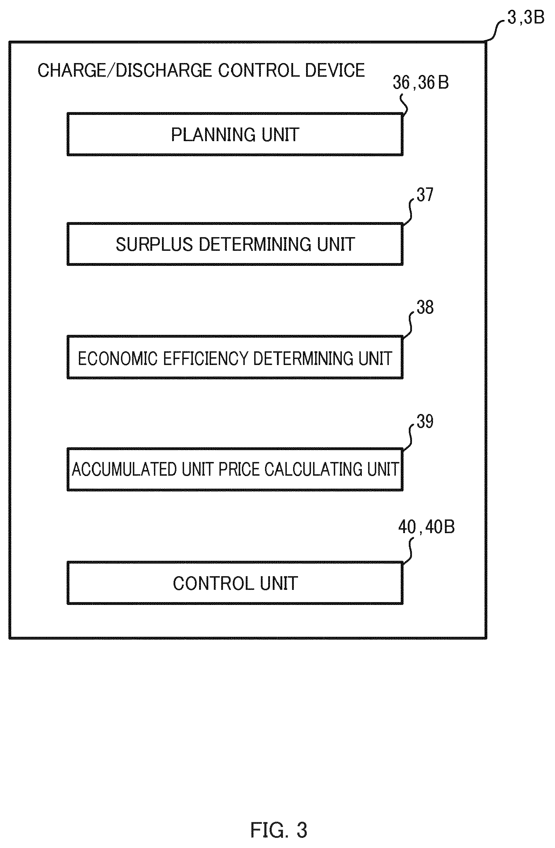

2 and Fig. 3. Fig. 2 is a block diagram illustrating hardware of the charge/discharge control device according to an embodiment of the present invention. Fig. 3 is a block diagram illustrating the charge/discharge control device according to an embodiment of the present invention.

The charge/discharge control device 3 includes a Central Processing Unit (CPU) 31, a communication device 32, a storage device 33, a display device 34, and an input device 35. The CPU 31 executes a program stored in the storage device 33, to perform various functions of the charge/discharge control device 3, and integrally controls the charge/discharge control device 3. The storage device 33 stores the above-described program and various pieces of information. The display device 34 is a display that displays information of the charge/discharge control device 3. The input device 35 is, for example, a keyboard and a computer mouse through which information is input to the charge/discharge control device 3. The communication device 32 performs communication between the measuring device M1 and the charge/discharge device 11 via a communication network 300. The communication unit 32 receives the measurement information and first price information T1 from the measuring device M1.

The charge/discharge control device 3 further includes a planning unit 36, a surplus determining unit 37 (first determining device), an economic efficiency determining unit 38 (second determining device and third determining device), an accumulated unit price calculating unit 39, a control unit 40 (also referred to as "various functions of the charge/discharge control device 3"). The various functions of the charge/discharge control device 3 are achieved by execution of a program stored in the storage device 33 by the CPU 31.

The planning unit 36 creates the control plan T3 for the storage battery 12 based on the first price information T1.

The surplus determining unit 37 performs determination with respect to PV surplus electricity generated in the consumer 10. The PV surplus electricity indicates a surplus with respect to the electric power W2 in the consumer 10. The PV surplus electricity is generated when a value of the electric power W2 exceeds a value of the electric power W1. The PV surplus electricity is, for example, supplied from the consumer 10 to the distribution line L1 and sold from the consumer 10 to an electric power company. Alternatively, the PV surplus electricity is, for example, supplied to the storage battery 12, to charge the storage battery 12.

The economic efficiency determining unit 38 performs determination with respect to an economic advantage based on control of charge and discharge of the storage battery 12. The accumulated unit price calculating unit 39 calculates an accumulated charging unit price X (accumulation price). The control unit 40 (second control device) controls the charge/discharge device 11, so as to control charge and discharge of the storage battery 12. Note that the economic efficiency determining unit 38 and the control unit 40 correspond to a first control device.

=== First Price Information ===

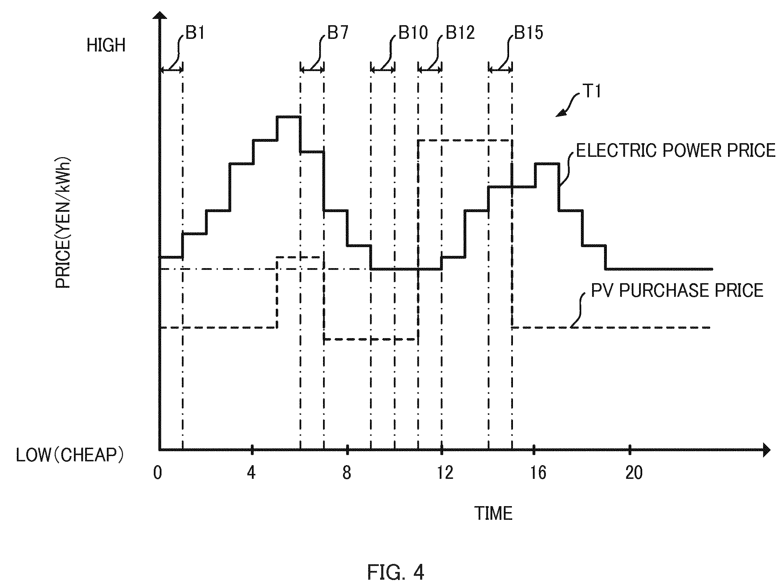

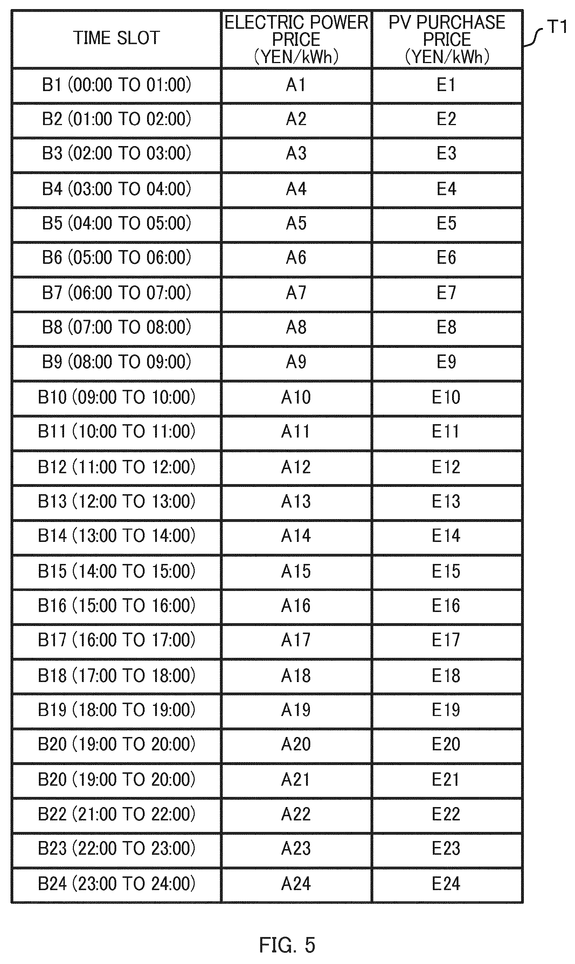

The following describes the first price information according to an embodiment of the present invention with reference to Fig. 4 and Fig. 5. Fig. 4 is a graph illustrating the first price information according to an embodiment of the present invention. Fig. 5 is a diagram illustrating the first price information according to an embodiment of the present invention.

In the first price information T1, time slots, planned values of electric power prices, and planned values of PV purchase prices are associated with one another.

The electric power price is determined based on real-time pricing. The real-time pricing means, for example, an electric power rate system in which the electric power prices vary with a time slot having e.g., one hour, in a day.

The electric power price means a price (unit price) of the electric power supplied from the distribution line L1 to the consumer 10 (also referred to as "purchase electric power") and a price (unit price) of the electric power supplied from the consumer 10 to the distribution line L1 (also referred to as a "selling electric power") by discharging of the storage battery 12. Note that the electric power supplied from the consumer 10 to the distribution line L1 includes the selling electric power and the PV surplus electricity, which is different from the selling electric power. In the first price information T1, the price of the selling electric power and the price of the purchase electric power are the same. That is, the first price information T1 indicates that both the price of the selling electric power in the time slot B1 and the price of the purchase electric power in the time slot B1 are A1, and similar information.

Further, the PV purchase price is determined based on a unit price variation. The PV purchase price indicates a unit selling price of the PV surplus electricity when the consumer 10 sells the PV surplus electricity. The PV purchase price, for example, varies with a time slot having e.g., one hour, in a day. The first price information T1 indicates that the PV purchase price in the time slot B1 is E1, and similar information.

Further, the first price information T1 (Fig. 4) indicates that the electric power prices are higher than the PV purchase prices in the time slots B1 to B11, the electric power prices are lower than the PV purchase prices in the time slots B12 to B15, and the electric power prices are higher than the PV purchase prices in the time slots B16 to B24.

=== Planning Unit ===

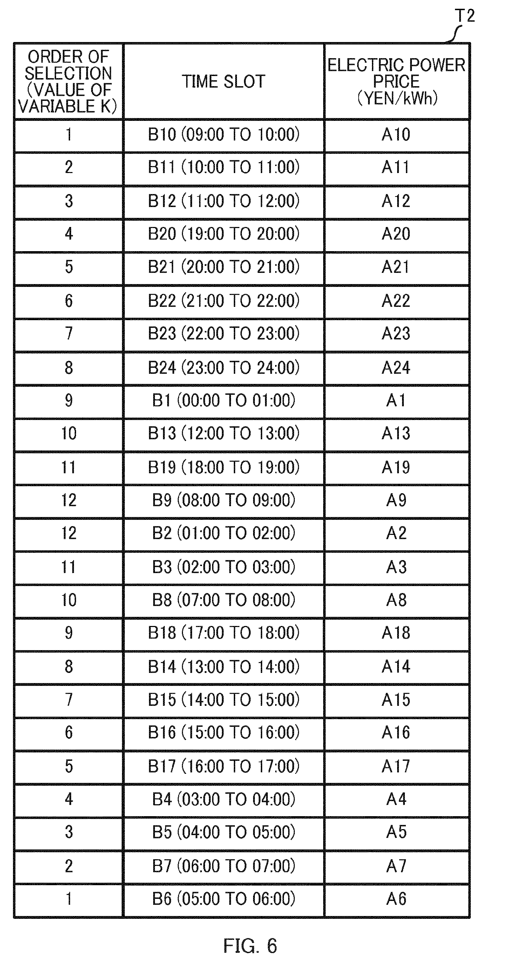

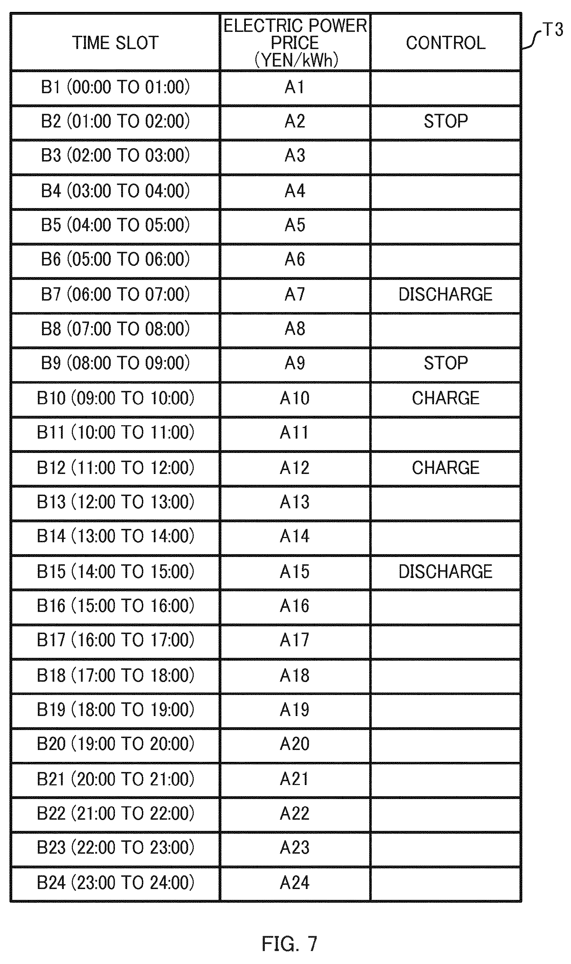

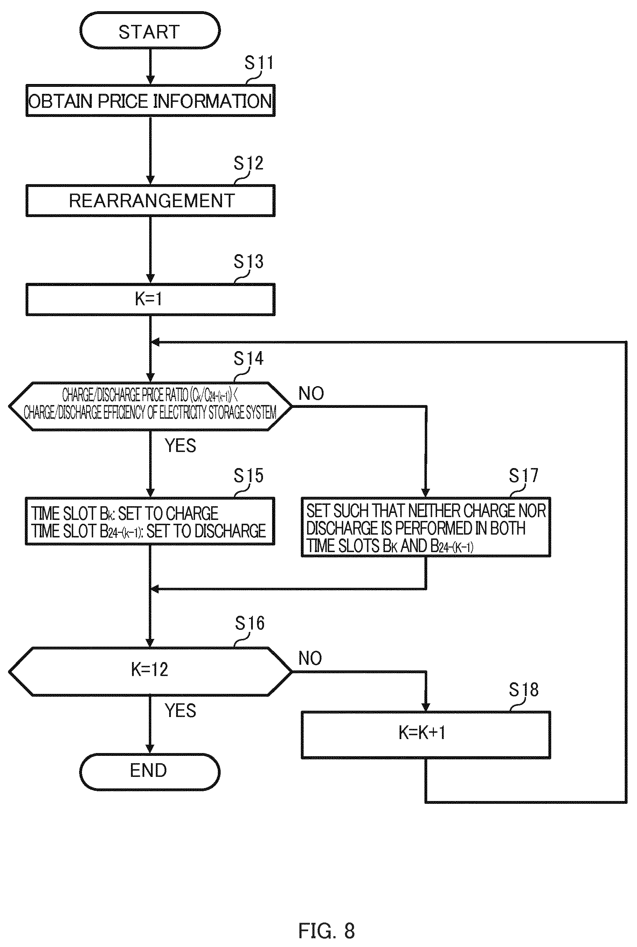

The following describes the planning unit according to an embodiment of the present invention with reference to Fig. 5 to Fig. 8. Fig. 6 is a diagram illustrating second price information according to an embodiment of the present invention. Fig. 7 is a diagram illustrating a control plan according to an embodiment of the present invention. Note that, in Fig. 7, any of control among charge, discharge, and stop is set in time slots other than the time slots B2, B7, B9, B10, B12, and B15 among the time slots B1 to B24. However, for convenience of explanation, the description thereof is omitted. In Fig. 7, charge means that the storage battery 12 is charged, discharge means that the storage battery 12 is discharged, and stop means that the storage battery 12 is neither charged nor discharged. Fig. 8 is a flowchart illustrating an operation of the planning unit according to an embodiment of the present invention.

<Outline>

The planning unit 36 rearranges the first price information T1 to create second price information T2. Thereafter, the planning unit 36 selects a pair of time slots in the second price information T2, and sets control in the selected pair of time slots. The planning unit 36 sets control, for example, in all the time slots of 24 hours in the first price information T1. The planning unit 36 creates the control plan T3 in which the settings of such control have been reflected.

<Details>

The planning unit 36 obtains the first price information T1 (Step S11). The planning unit 36 sorts the combinations of the time slots and the electric power prices corresponding to these time slots, in the first price information T1, in the order of ascending electric power prices, to create the second price information T2 (Step S12). Note that Fig. 6 illustrates a combination indicative of the lowest price A10 among A1 to A24 on the uppermost section while a combination indicative of the highest price A6 on the lowermost section.

The planning unit 36 sets 1 as a value of a variable K (Step S13). Note that the variable K is used to select a pair of electric power prices from the second price information T2. When the value of the variable K is 1, the planning unit 36 selects the electric power prices A10 and A6. When the value of the variable K is 2, the planning unit 36 selects the electric power prices A11 and A7.

The planning unit 36 calculates a charge/discharge price ratio based on the selected pair of electric power prices A10 and A6. Specifically, the planning unit 36 employs, as the charge/discharge price ratio when the value of the variable K is 1, a result of a division performed using A10, which is lower electric power price of the pair of electric power prices, as a dividend, and A6, which is a higher electric power price, as a divisor.

$C_k$ and $C_{24-(k-1)}$ at Step S14 correspond to the electric power price in the second price information T2. The "k" in $C_k$ and $C_{24-(k-1)}$ corresponds to the variable K. For example, when the value of the variable K is 1, $C_k$ at Step S14 is $C_1$ and $C_{24-(k-1)}$ is $C_{24}$. At this time, the index of C indicates the ascending order of the electric power prices in the second price information T2. Accordingly, $C_1$ and $C_{24}$ indicate A10 and A6 in the second price information T2, respectively. That is, for example, when the value of the variable K is 1, $C_k$ indicates A10, and $C_{24-(k-1)}$ indicates A6. Further, for example, when the value of the variable K is 2, $C_k$ indicates A11, and $C_{24-(k-1)}$ indicates A7.

The planning unit 36 determines (judges) whether the charge/discharge price ratio is smaller than charge/discharge efficiency of an electricity storage system (also referred to as "charge/discharge efficiency") (Step S14).

The charge/discharge efficiency is a product of charge efficiency *p* when the storage battery 12 is charged with electric power and discharge efficiency *q* when the storage battery 12 that is charged with electric power is discharged. For example, the charge efficiency *p* of 0.9 means that, when the electric power of 1 (kWh) is supplied to the storage battery 12, electric power corresponding to 0.9 (kWh), which is equivalent to 0.9 times of 1 (kWh), is charged. Further, for example, the discharge efficiency *q* of 0.9 means that, when the electric power corresponding to 1 (kWh) has been charged to the storage battery 12 and the electric power charged to the storage battery 12 is all discharged, the electric power of 0.9 (kWh), which is equivalent to 0.9 times of 1 (kWh), is output from the storage battery 12.

For example, when it is determined (judged) at Step St14 that the charge/discharge price ratio is smaller than the charge/discharge efficiency (YES at Step S14), the planning unit 36 sets charge and discharge in the time slot corresponding to the selected pair of electric power prices, assuming that the economic advantage for the consumer 10 is brought. Specifically, the planning unit 36 sets charge control in the time slot B10 corresponding to A10 which is lower one of the pair of electric power prices, and sets discharge control in the time slot B6 corresponding to A6 which is higher electric power price (Step S15). At this time, the planning unit 36 reflects the setting results in the control plan T3.

Meanwhile, for example, when it is determined (judged) at Step S14 that the charge/discharge price ratio is not smaller than the charge/discharge efficiency (NO at Step S14), the planning unit 36 sets stop in both the time slots corresponding to the selected pair of electric power prices, assuming that the economic advantage for the consumer 10 is not brought (Step S17). At this time, the planning unit 36 reflects the setting results in the control plan T3.

The planning unit 36 determines whether the value of the variable K is 12 (Step S16). For example, when the planning unit 36 determines that the value of the variable K is not 12 (NO at Step S16), the planning unit 36 adds 1 to the value of the variable K (Step S18) and then executes the determination at Step S14 again, assuming that the control has not yet been set to all the time slots in the second price information T2. Meanwhile, for example, when the planning unit 36 determines that the value of the variable K is 12 (YES at Step S16), the planning unit 36 ends the operation, assuming that the control has been set to all the time slots in the second price information T2.

=== Surplus Determining Unit ===

The following describes the surplus determining unit according to an embodiment of the present invention with reference to Fig. 1.

The surplus determining unit 37 determines whether the amount of power generation of the distributed power supply G1 is larger than the amount of power consumption of the load R1, based on the measurement information received by the communication device 32.

When the surplus determining unit 37 determines that the amount of power generation is larger than the amount of power consumption, this means that the PV surplus electricity is generated. Therefore, it is preferable to control the charge/discharge of the storage battery 12 using this PV surplus electricity, so as to bring the economic advantage (economic benefit) to the consumer 10. For example, in this case, the charge/discharge control device 3 performs control so as to avoid double power generation in the consumer 10, performs control so as to increase the electric energy of the PV surplus electricity which is to be sold by the consumer 10, and performs control so as to reduce the accumulated charging unit price X. Note that, when the surplus determining unit 37 determines that the amount of power generation is smaller than the amount of power consumption, this means that the PV surplus electricity is not generated.

=== Accumulated Unit Price Calculating unit ===

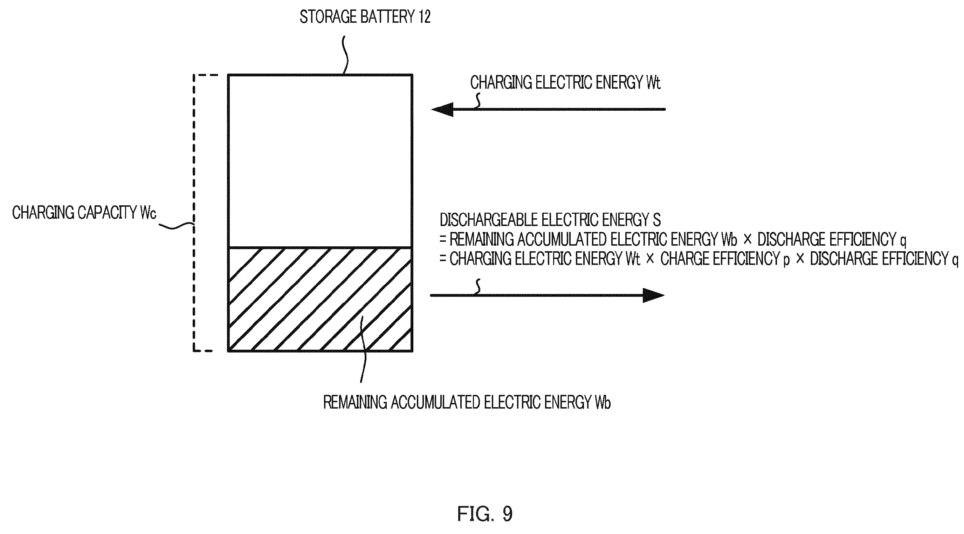

The following describes the accumulated unit price calculating unit according to an embodiment of the present invention with reference to Fig. 9. Fig. 9 is a conceptual diagram illustrating electric power input to / output from the storage battery according to an embodiment of the present invention.

The accumulated unit price calculating unit 39 calculates dischargeable electric energy S and calculates the accumulated charging unit price X.

The dischargeable electric energy S corresponds to the maximum value of the electric energy that can be discharged based on remaining accumulated electric energy Wb of the storage battery 12. The remaining accumulated electric energy Wb corresponds to the amount of charge that is charged at the present point of time in a charging capacity Wc of the storage battery 12. The accumulated unit price calculating unit 39 calculates the dischargeable electric energy S based on charging electric energy Wt, which indicates the electric energy supplied to the storage battery 12, and calculates the dischargeable electric energy S based on the remaining accumulated electric energy Wb. Specifically, the accumulated calculating unit 39 calculates the dischargeable electric energy S using Expression (1) and Expression (2).

[Formula 1]

$$\text{Dischargeable electric energy } S = \text{remaining accumulated electric energy } Wb \times \text{discharge efficiency } \boldsymbol{q} \cdots (1)$$

$$\text{Dischargeable electric energy } S = \text{sum of charging electric energy } Wt \times \text{charge efficiency } \boldsymbol{p} \times \text{discharge efficiency } \boldsymbol{q} \cdots (2)$$

The accumulated charging unit price X is a price determined according to the amount of the price of purchase electric power accumulated to charge the storage battery 12. The accumulated unit price calculating unit 39 calculates the accumulated charging unit price X using Expression (3).

[Formula 2]

$$\text{Accumulated charging unit price } Xb = (\text{dischargeable}$$
$$\text{electric energy } Sa \times \text{accumulated charging unit price } Xa + \text{electric}$$
$$\text{power price } At \times \text{charging electric energy } Wt \times \text{charge efficiency}$$
$$\boldsymbol{p} \times \text{discharge efficiency } \boldsymbol{q})/\text{dischargeable electric energy } Sb$$
$$\cdots (3)$$

Note that the accumulated charging unit prices Xa and Xb indicate the accumulated charging unit price X in a time A and the accumulated charging unit price X in a time B after the time A, respectively. The dischargeable electric energies Sa and Sb indicate the dischargeable electric energy S in the time A and the dischargeable electric energy S in the time B, respectively. The electric power price At indicates the electric power price in a time slot from the time A to the time B. The charging electric energy Wt indicates the charging electric energy in the time slot from the time A to the time B.

=== Economic Efficiency Determining Unit and Control Unit ===

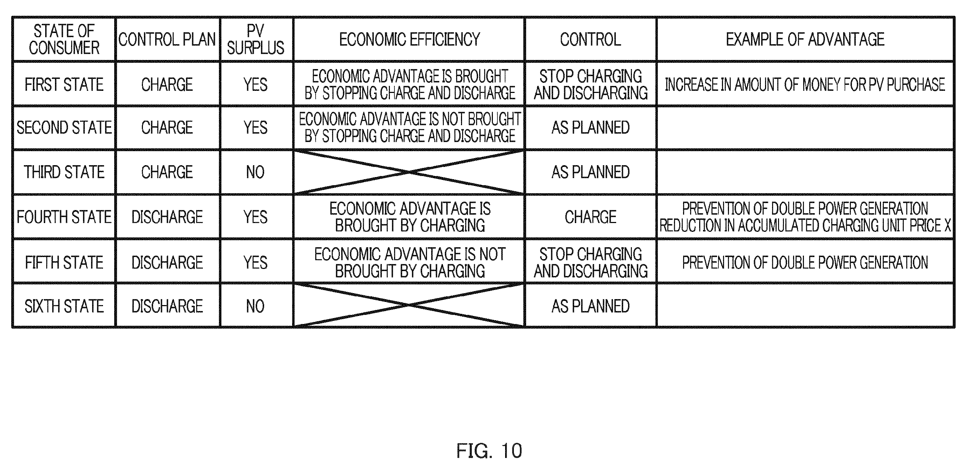

The following describes the economic efficiency determining unit and the determining unit according to an embodiment of the present invention with reference to Fig. 7 and Fig. 10. Fig. 10 is a diagram illustrating a state of the consumer, control of the storage battery, and the like according to an embodiment of the present invention.

The economic efficiency determining unit 38 performs determination with respect to the economic advantage brought to the consumer 10.

=Time Slot during Which Storage Battery is Set to be Charged=

In the time slot during which the charge is set in the control plan T3 (also referred to as "estimated (planned) charging time slot"), the economic efficiency determining unit 38 determines whether the electric power price is higher than or lower than the PV purchase price, and determines whether the PV purchase price is higher than or lower than the accumulated charging unit price X. Further, in the estimated charging time slot, the economic efficiency determining unit 38 determines whether the PV purchase price is higher than or lower than the sum of the accumulated charging unit price X and a predetermined unit price.

=Time Slot during Which Storage Battery is Set to be Discharged=

In the time slot during which discharge is set in the control plan T3 (also referred to as "estimated discharging time slot"), the economic efficiency determining unit 38 determines whether the PV purchase price is higher than or lower than the electric power price, and determines whether the PV purchase price is higher than or lower than the accumulated charging unit price X. Further, in the estimated discharging time slot, the economic efficiency determining unit 38 determines whether a price according to the PV purchase price is higher than or lower than the accumulated charging unit price X. Note that the economic efficiency determining unit 38 calculates the price according to the PV purchase price with Expression (4).

[Formula 3]

$$\text{Price according to PV purchase price (PV purchase price}$$
$$3t/\text{charge efficiency } \boldsymbol{p} \times \text{discharge efficiency } \boldsymbol{q}) + \text{predetermined}$$
$$\text{price } \cdots (4)$$

=Time Slot during Which Storage Battery is Set to be Neither Charged Nor Discharged=

In the time slot during which stop is set in the control plan T3 (also referred to as "estimated stop time slot"), the economic efficiency determining unit 38 determines whether the electric power price is higher than or lower than the accumulated charging unit price X, determines whether the price according to the electric power price is higher than or lower than the accumulated charging unit price X, or determines whether the electric power price is higher than or lower than the sum of the accumulated charging unit price X and the predetermined unit price.

The economic efficiency determining unit 38 calculates the price according to the electric power price with Expression (5).

[Formula 4]

$$\text{Price according to electric power price} = \text{electric power}$$
$$\text{price At} / (\text{charge efficiency } \boldsymbol{p} \times \text{discharge efficiency } \boldsymbol{q}) +$$
$$\text{predetermined price} \cdots (5)$$

The control unit 40 controls charge and discharge of the storage battery 12, based on the determination result of the economic efficiency determining unit 38. Note that, in the respective predetermined unit prices in Expressions (4) and (5), the predetermined unit price in the sum of the accumulated charging unit price X and the predetermined unit price at Step S25, and the predetermined unit price in the sum of the accumulated charging unit price X and the predetermined unit price at Step S34 are 0 or positive values. The values may be different from one another, may be the same value, or may be set based on information input through the input device 35. Further, these predetermined unit prices provide a function as margins for determination by the economic efficiency determining unit 38.

=== Operation of Charge/Discharge Control Device ===

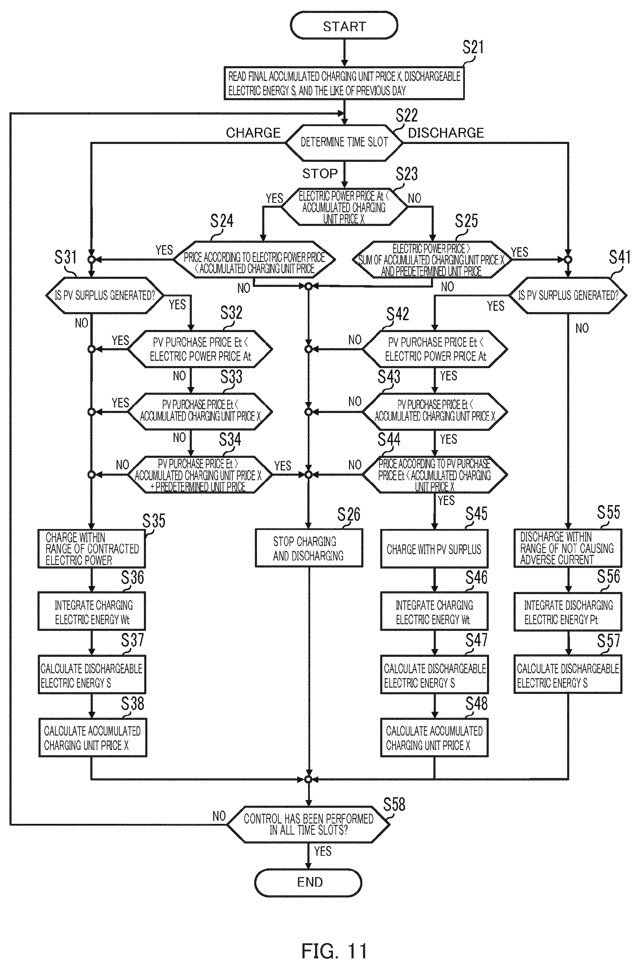

The following describes an operation of the charge/discharge control device according to an embodiment of the present invention, with reference to Fig. 1, Fig. 10, and Fig. 11. Fig. 11 is a flowchart illustrating the operation of the charge/discharge control device according to an embodiment of the present invention.

The charge/discharge control device 3 reads the final accumulated charging unit price X, dischargeable electric energy S, and control plan T3 of the previous day (Step S21). Note that the storage device 33 may store these pieces of information to be read.

The charge/discharge control device 3 determines whether the current time slot is any of the estimated charging time slot, the estimated discharging time slot, and the estimated stop time slot (Step S22). For example, when the current time slot is the time slot B2, B7, or B10 (Fig. 7), the charge/discharge control device 3 determines that the time slot is the estimated stop time slot, the estimated discharging time slot, or the estimated charging time slot, respectively.

=Control of Estimated Charging Time Slot=

When the charge/discharge control device 3 determines that the time slot is the estimated charging time slot at Step S22, the surplus determining unit 37 determines whether the amount of power generation of the distributed power supply G1 is larger than or smaller than the amount of power consumption of the load R1 (Step S31). When the surplus determining unit 37 determines that that the amount of power generation is smaller than the amount of power consumption (NO at Step S31), the control unit 40 performs control so that the storage battery 12 is charged within a range of contracted electric power (Step S35). Meanwhile, when the surplus determining unit 37 determines that the amount of power generation is larger than the amount of power consumption (YES at Step S31), the following determination and control are performed, assuming that the PV surplus electricity is generated.

<Electric Power Price and PV Purchase Price>

The economic efficiency determining unit 38 determines whether the electric power price is higher than or lower than the PV purchase price (Step S32). When the economic efficiency determining unit 38 determines that the electric power price is higher than the PV purchase price (YES at Step S32), this means that the economic efficiencydeterminingunit 38 determines the economic advantage being brought to the consumer 10 by charging the storage battery 12. In this case, the control unit 40 performs the operation at Step S35. In this case, since the PV surplus electricity is supplied to the storage battery 12, the electric energy of the purchase electric power is reduced. Therefore, the sum of money for a consideration paid from the consumer 10 to the electric power company is reduced, to bring the economic advantage to the consumer 10.

Meanwhile, when the economic efficiency determining unit 38 determines that the electric power price is lower than the PV purchase price (NO at Step S32), the economic efficiency determining unit 38 determines whether the PV purchase price is higher than or lower than the accumulated charging unit price X (Step S33).

<PV Purchase Price and Accumulated Charging Unit Price X>

When the economic efficiency determining unit 38 determines that the PV purchase price is lower than the accumulated charging unit price X (YES at Step S33), this means that the economic efficiency determining unit 38 determines the economic advantage being brought to the consumer 10 by charging the storage battery 12. In this case, the control unit 40 performs the operation at Step S35. This brings the economic advantage similar to that in the case of YES at Step S32. Further, in this case, the sum of money for the accumulated charging unit price X is reduced, to bring the economic advantage to the consumer 10.

Meanwhile, when the economic efficiency determining unit 38 determines that the PV purchase price is higher than the accumulated charging unit price X (NO at Step S33), the economic efficiencydeterminingunit 38 determines whether the PVpurchase price is higher than or lower than the sum of the accumulated charging unit price X and the predetermined unit price (Step S34).

<PV Purchase Price and Sum of Accumulated Charging Unit Price X and Predetermined Unit Price>

When the economic efficiency determining unit 38 determines that the PV purchase price is higher than the sum of the accumulated charging unit price X and the predetermined unit price (YES at Step S34), this means that the economic efficiency determining unit 38 determines the economic advantage being brought to the consumer 10 by neither charging nor discharging the storage battery 12. In this case, the control unit 40 performs control so that the storage battery 12 is neither charged nor discharged (Step S26). In this case, since the PV surplus electricity is not supplied to the storage battery 12, the electric energy of the PV surplus electricity sold from the consumer 10 to the electric power company can be increased. Therefore, the sum of money for the consideration paid from the electric power company to the consumer 10 is increased, to bring the economic advantage to the consumer 10.

Meanwhile, when the economic efficiency determining unit 38 determines that the PV purchase price is lower than the sum of the accumulated charging unit price X and the predetermined unit price (NO at Step S34), this means that the economic efficiency determining unit 38 determines the economic advantage not being brought to the consumer 10 by neither charging nor discharging the storage battery 12. In this case, the control unit 40 performs the operation at Step S35.

After the above, the charge/discharge control device 3 integrates the charging electric energy Wt (StepS36), calculates the dischargeable amount S (Step S37), and calculates the accumulated charging unit price X (Step S38). Note that, at Step S37, the charge/discharge control device 3 assumes, as the dischargeable electric energy S, the sum of the dischargeable electric energy S before being charged at Step S35, and the product of the charging electric energy Wt, which has been integrated atStepS36, the charge efficiency $p$, and the discharge efficiency $q$.

The charge/discharge control device 3 determines whether control has been performed in all the time slots in the charge plan T3 (Step S58) . That is, the charge/discharge control device 3 determines whether all the control of the storage battery 12 in a day has been performed. When the charge/discharge control device 3 determines that all the control of the storage battery 12 in a day has been performed (YES at Step S58), the charge/discharge control device 3 ends the operation.

Meanwhile, when the charge/discharge control device 3 does not determine that all the control of the storage battery 12 in a day has been performed (NO at Step S58), the charge/discharge control device 3 performs determination at Step S22 again.

=Control of Estimated Discharging Time Slot=

When the charge/discharge control device 3 determines that the time slot is the estimated discharging time slot at Step S22, the surplus determining unit 37 performs determination at Step S41. The determination at Step S41 is similar to the determination at Step S31. When the surplus determining unit 37 determines that the amount of power generation is smaller than the amount of power consumption (NO at Step S41), the control unit 40 performs control so that the storage battery 12 is discharged within a range of not causing an adverse current (Step S55). Note that "within a range of not causing an adverse current" may indicate, for example, within a range of the electric energy set in advance by the consumer 10. Thereafter, the charge/discharge control device 3 integrates discharging electric energy Pt (Step S56), calculates the dischargeable electric energy S (Step S57), and then performs the determination at Step S58 . Note that, at Step S57, the charge/discharge control device 3 assumes, as the dischargeable electric energy S, a difference between the discharging electric energy Pt, which has been integrated at Step S56, and the dischargeable electric energy S before being discharged at Step S55.

At Step S41, when the surplus determining unit 37 determines that the amount of power generation is larger than the amount of power consumption (YES at Step S41), the following determination and control are performed assuming that the PV surplus electricity is generated.

<PV Purchase Price and Electric Power Price>

The economic efficiency determining unit 38 determines whether the PV purchase price is higher than or lower than the electric power price (Step S42). When the economic efficiency determining unit 38 determines that the PV purchase price is higher than the electric power price (NO at Step S42), this means that the economic efficiency determining unit 38 determines the economic advantage being brought to the consumer 10 by stopping the charge and discharge of the storage battery 12. In this case, the control unit 40 performs the operation at Step S26. In such a case, while the consumer 10 is prevented from entering a double power generation state, the consumer 10 is allowed to sell the PV surplus electricity to the electric power company. Therefore, the consideration is paid from the electric power company to the consumer 10, to bring the economic advantage to the consumer 10.

Note that the double power generation state means a state where both the PV surplus electricity and the electric power output by discharging the storage battery 12 are supplied to the distribution line L1. An electricity contract between the consumer 10 and the electric power company stipulates that the PV purchase price is to be reduced in the double power generation state. Therefore, the double power generation state needs to be prevented so as to bring and increase the economic advantage to the consumer 10.

At Step S42, when the economic efficiency determining unit 38 determines that the PVpurchase price is lower than the electric power price (YES at Step S42), the economic efficiency determining unit 38 determines whether the PV purchase price is higher than or lower than the accumulated charging unit price X (Step S43).

<PV Purchase Price and Accumulated Charging Unit Price X>

When the economic efficiency determining unit 38 determines that the PV purchase price is higher than the accumulated charging unit price X (NO at Step S43), this means that the economic efficiency determining unit 38 determines the economic advantage being brought to the consumer 10 by stopping charge and discharge of the storage battery 12. In this case, the control unit 40 performs the operation at Step S26. This brings the economic advantage similar to that in the case of NO at Step S42.

At Step S43, when the economic efficiency determining unit 38 determines that the PV purchase price is lower than the accumulated charging unit price X (YES at Step S43), the economic efficiency determining unit 38 determines whether the price according to the PV purchase price is higher than or lower than the accumulated charging unit price X (Step S44).

<Price According to PV Purchase Price and Accumulated Charging Unit Price X>

When the economic efficiency determining unit 38 determines that the price according to the PV purchase price is lower than the accumulated charging unit price X (YES at Step S44), this means that the economic efficiency determining unit 38 determines the economic advantage being brought to the consumer 10 by charging the storage battery 12. In this case, the control unit 40 performs control so that the PV surplus electricity is charged to the storage battery 12 (Step S45). This brings the economic advantage similar to that in the case of YES at Step S33. Further, this prevents the consumer 10 from entering the double power generation state. After the above, the charge/discharge control device 3 performs the operations at Steps S46 to S48 and then performs the determination at Step S58. Note that the operations at Steps S46 to S48 are similar to the operations at Steps S36 to S38, respectively.

Meanwhile, when the economic efficiency determining unit 38 determines that the price according to the PV purchase price is higher than the accumulated charging unit price X (NO at Step S44), this means that the economic efficiency determining unit 38 determines the economic advantage not being brought to the consumer 10 by charging the storage battery 12. In this case, the control unit 40 performs the operation at S26.

=Control of Estimated Stop Time Slot=

When the charge/discharge control device 3 determines that the time slot is the estimated stop time slot at Step S22, the economic efficiency determining unit 38 determines whether the electric power price is higher than or lower than the accumulated charging unit price X (Step S23). After performing the determination at Steps S24 and S25 based on the determination results at Step S23, the charge/discharge control device 3 performs predetermined control.

[Second Embodiment]

A charge/discharge control device 3B (Fig. 3) according to the second embodiment has a configuration other than the economic efficiency determining unit 38 in the charge/discharge control device 3 of the first embodiment. In the charge/discharge control device 3B, the planning unit 36 and the control unit 40 are changed to a planning unit 36B and a control unit 40B, respectively. The charge/discharge control device 3B other than these components has a configuration similar to that of the charge/discharge control device 3.

=== Charge/Discharge Control Device ===

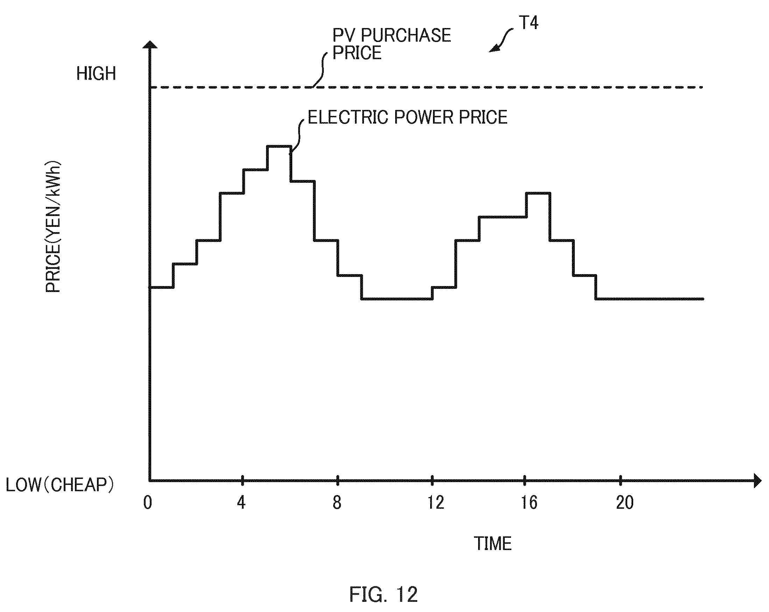

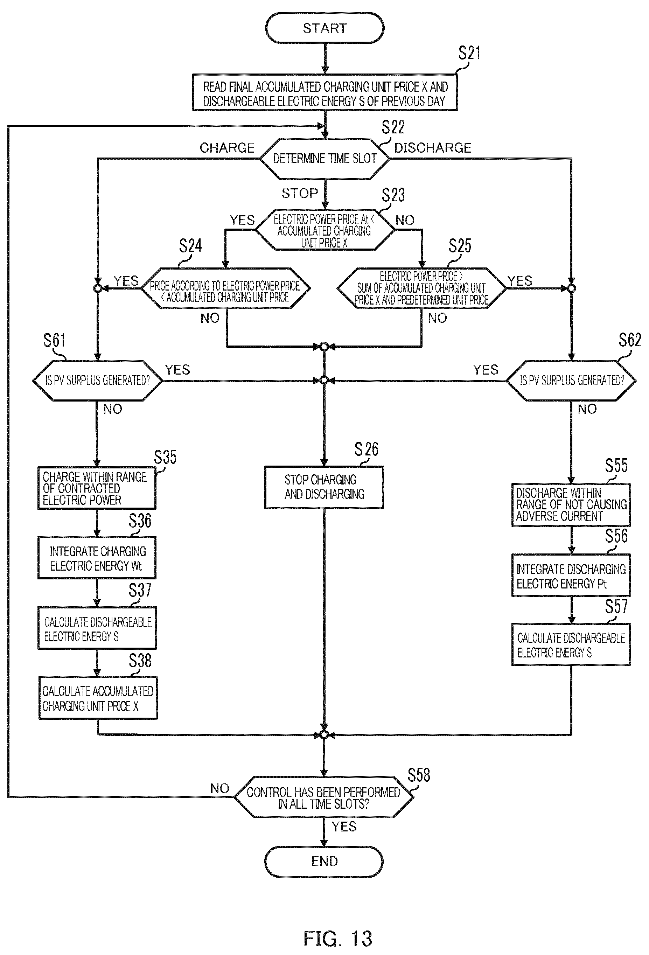

The following describes the charge/discharge control device according to an embodiment of the present invention with reference to Fig. 3, Fig. 12, and Fig. 13. Fig. 12 is a graph illustrating fourthprice information according to an embodiment of the present invention. Fig. 13 is a flowchart illustrating an operation of the charge/discharge control device according to an embodiment of the present invention. Operations similar to the operations in Fig. 11 will be given the similar reference numerals, and the descriptions thereof are omitted.

The fourth price information T4 is information similar to the first price information T1 (Fig. 4). Note that the PV purchase price in the fourth price information T4 is determined based on a fixed unit price. The fixed unit price means that the unit price does not vary with a time slot. The PV purchase price in the fourth price information T4 is set higher than the electric power price.

The charge/discharge control device 3B includes the planning unit 36B and the control unit 40B.

The planning unit 36B creates a predetermined control plan based on the fourth price information T4. Note that the configuration that the planning unit 36B creates the predetermined control plan is similar to the configuration that the planning unit 36 creates the control plan T3.

The control unit 40B controls charge and discharge of the storage battery 12 based on the determination result of the surplus determining unit 37.

Specifically, the surplus determining unit 37 performs the determination at Steps S61 and S62 (Fig. 13) similar to Steps S31 and S41 (Fig. 11). When the surplus determining unit 37 determines that the amount of power generation is smaller than the amount of power consumption (NO at Step S61 and NO at Step S62), the control unit 40B performs the operations at Steps S35 and S55. Meanwhile, when the surplus determining unit 37 determines that the amount of power generation is larger than the amount of power consumption (YES at Step S61 and YES at Step S62), the control unit 40B performs control so that the storage battery 12 is neither charged nor discharged, assuming that the PV surplus electricity is generated (Step S26). Note that, in the case of YES at Step S61, this brings the economic advantage similar to that in the case of YES at Step S34. Further, in the case of YES at Step S62, this brings the economic advantage similar to that in the case of NO at Step S42.

As described above, the charge/discharge control device 3 controls charge and discharge of the storage battery 12 in the consumer 10. The charge/discharge control device 3 includes the load R1, the distributed power supply G1, which supplies the load R1 with electric power, and the storage battery 12, which is coupled to the load R1 and the distributed power supply G1. The charge/discharge control device 3 includes the surplus determining unit 37 and the control unit 40. The surplus determining unit 37 determines whether the amount of power generation of the distributed power supply G1 is larger than the amount of power consumption of the load R1. When the surplus determining unit 37 determines that the amount of power generation of the distributed power supply G1 is larger than the amount of power consumption of the load R1, the control unit 40 controls charge and discharge of the storage battery 12 so that the economic advantage (economic benefit) is brought to the consumer 10 by control of the storage battery 12. Therefore, charge and discharge of the storage battery 12 can be controlled so as to bring the economic advantage to the consumer 10.

Further, the charge/discharge control device 3 includes the economic efficiency determining unit 38. The control of the storage battery 12 is planned in advance with the control plan T3. When discharging the storage battery 12 is planned in the control plan T3, the economic efficiency determining unit 38 determines whether the PV purchase price (power selling price) of the PV surplus electricity is higher than or lower than the electric power price (power purchase price) of the purchase electric power (supply power) supplied to the consumer 10. When the economic efficiency determining unit 38 determines that the PV purchase price is higher than the electric power price, the control unit 40 performs control so that the storage battery 12 is neither charged nor discharged regardless of the control plan T3. Thus, while the consumer 10 is prevented from entering the double power generation state, the consumer 10 is also allowed to sell the PV surplus electricity to the electric power company. Therefore, the consideration is paid from the electric power company to the consumer 10, to bring the economic advantage to the consumer 10.

Further, when the economic efficiency determining unit 38 determines that that PV purchase price is lower than the electric power price, the economic efficiency determining unit 38 determines whether the PV purchase price is higher than or lower than the accumulated charging unit price X. When the economic efficiency determining unit 38 determines that the PV purchase price is higher than the accumulated charging unit price X, the control unit 40 performs control so that the storage battery 12 is neither charged nor discharged regardless of the control plan T3. Thus, while the consumer 10 is prevented from entering the double power generation state, the consumer 10 is also allowed to sell the PV surplus electricity to the electric power company, to bring the economic advantage to the consumer 10.

Further, when charging the storage battery 12 is planned with the control plan T3, the economic efficiency determining unit 38 determines whether the electric power price of the purchase electric power supplied to the consumer 10 is higher than or lower than the PV purchase price of the PV surplus electricity. When the economic efficiency determining unit 38 determines that the electric power price is higher than the PV purchase price, the control unit 40 performs control so that the storage battery 12 is charged based on the control plan T3. Thus, since the PV surplus electricity is supplied to the storage battery 12, the electric energy of the purchase electric power reduces. Therefore, the sum of money for the consideration paid from the consumer 10 to the electric power company is reduced, to bring the economic advantage to the consumer 10.

Further, when the economic efficiency determining unit 38 determines that the electric power price is lower than the PV purchase price, the economic efficiency determining unit 38 determines whether the PV purchase price is higher than or lower than the accumulated charging unit price X. When the economic efficiency determining unit 38 determines that the PV purchase price is lower than the accumulated charging unit price X, the control unit 40 performs control so that the storage battery 12 is charged based on the control plan T3. Therefore, the sum of money for the accumulated charging unit price X is reduced, to bring the economic advantage to the consumer 10.

Further, when discharging the storage battery 12 is planned in the control plan T3, the economic efficiency determining unit 38 determines whether the economic advantage is brought to the consumer 10 by charging the storage battery 12. When the economic efficiency determining unit 38 determines that the economic advantage is brought to the consumer 10, the control unit 40 performs control so that the storage battery 12 is charged regardless of the control plan T3. In this case, while the consumer 10 is prevented from entering the double power generation state, the sum of money for the accumulated charging unit price X is reduced, to bring the economic advantage to the consumer 10. Meanwhile, when the economic efficiency determining unit 38 determines that the economic advantage is not brought to the consumer 10, the control unit 40 performs control so that the storage battery 12 is neither charged nor discharged regardless of the control plan T3. In this case, the consumer 10 is prevented from entering the double power generation state.

Further, when the economic efficiency determining unit 38 determines that the price according to the PV purchase price is lower than the accumulated charging unit price X, this means that the economic efficiency determining unit 38 determines the economic advantage being brought to the consumer 10 by charging the storage battery 12. When the economic efficiency determining unit 38 determines that the price according to the PV purchase price is higher than the accumulated charging unit price X, this means that the economic efficiency determining unit 38 determines the economic advantage not being brought to the consumer 10 by charging the storage battery 12. Accordingly, the accuracy of determining whether the economic advantage is brought can be improved.

Further, when charging the storage battery 12 is planned with the control plan T3, the economic efficiency determining unit 38 determines whether the economic advantage is brought to the consumer 10 by neither charging nor discharging the storage battery 12. When the economic efficiency determining unit 38 determines that the economic advantage is brought to the consumer 10, the control unit 40 performs control so that the storage battery 12 is neither charged nor discharged regardless of the control plan T3. Thus, since the PV surplus electricity is not supplied to the storage battery 12, the electric energy of the PV surplus electricity sold from the consumer 10 to the electric power company is increased. Therefore, the sum of money for the consideration paid from the electric power company to the consumer 10 is increased, to bring the economic advantage to the consumer 10. When the economic efficiency determining unit 38 determines that the economic advantage is not brought to the consumer 10, the control unit 40 performs control so that the storage battery 12 is charged based on the control plan T3. In this case, since the PV surplus electricity is supplied to the storage battery 12, the electric energy of the purchase electric power can be reduced.

Further, when the economic efficiency determining unit 38 determines that the PV purchase price is higher than the sum of the accumulated charging unit price X and the predetermined unit price, this means that the economic efficiency determining unit 38 determines the economic advantage being brought to the consumer 10 by neither charging nor discharging the storage battery 12. When the economic efficiency determining unit 38 determines that the PV purchase price is lower than the sum of the accumulated charging unit price X and the predetermined unit price, this means that the economic efficiency determining unit 38 determines the economic advantage not being brought to the consumer 10 by neither charging nor discharging the storage battery 12. Accordingly, the accuracy of determining whether the economic advantage is brought can be improved.

Note that the first and the second embodiments are intended for easy understanding of the present invention and are not in any way to be construed as limiting the present invention. The present invention may be modified and improved without departing from the scope of the invention, and equivalents thereof are also encompassed by the invention.

The first embodiment describes that, in the case of YES at Step S31, the determination at Steps S32 to S34 and the control based on the determination results are performed; however, this should not be constructed in a limiting sense. For example, as determination after YES at Step S31, determination and control of at least one of Steps S32 to S34 may be performed. That is, for example, among Steps S32 to S34, only any one of the steps may be provided. Alternatively, only Steps S32 and S33, only Steps S33 and S34, or only Steps S32 and S34 may be provided. Similarly, for example, in the case of YES at Step S41, determination and control of at least any one of Steps S42 to S44 may be performed.

Further, the first embodiment describes the case of the distributed power supply G1 being the photovoltaic power generation device; however, this should not be constructed in a limiting sense. For example, the distributed power supply G1 may be a wind power generator.

Further, the first embodiment describes that the planning unit 36 creates the control plan T3; however, this should not be constructed in a limiting sense. For example, the control plan T3 may be set in advance or information indicative of the control plan T3 may be input via the input device 35.

Further, the first embodiment describes that the first price information T1 indicates the electric power prices for every one hour, and the like; however, this should not be constructed in a limiting sense. For example, the first price information T1 may indicate the electric power prices for every 30 minutes or the like.

Further, the first embodiment describes that, in the first price information T1, the prices of the selling electric power are the same as the prices of the purchase electric powers, respectively; however, this should not be constructed in a limiting sense. For example, the price of the selling electric power and the price of the purchase electric power in the same time slot may be different from each other.

Further, using another charge/discharge control device having a configuration similar to the configuration of the charge/discharge control device 3, for example, transmission and reception of electric power between the distribution line L1 and an electric power storage device, such as a flywheel coupled to the distribution line L1, may be controlled.

Further, for example, the charge/discharge device 11 may perform the function of the charge/discharge control device 3, and the measuring device M1 may perform the function of the charge/discharge control device 3.

[Reference Signs List]

| | |
|---|---|
| 3, 3B | charge/discharge control device |
| 10 | consumer |
| 12 | storage battery |
| 37 | surplus determining unit |
| 38 | economic efficiency determining unit |
| 40, 40B | control unit |
| G1 | distributed power supply |
| R1 | load |

**Claims**

1. A charge/discharge control device configured to control charge and discharge of a storage battery in a consumer, the consumer including an electric power load, a distributed power supply, and the storage battery, the distributed power supply being configured to supply the electric power load with electric power, the storage battery being coupled to the electric power load and the distributed power supply, the charge/discharge control device comprising:

   a first determining device configured to determine whether an amount of power generation of the distributed power supply is larger than an amount of power consumption of the electric power load; and
   a first control device configured to, when the first determining device determines that the amount of power generation is larger than the amount of power consumption, control charge and discharge of the storage battery so that an economic benefit is brought to the consumer by control of the storage battery.

2. The charge/discharge control device according to claim 1, wherein:

   the control of the storage battery is planned in advance with a control plan, and
   the first control device includes

      a second determining device configured to, when discharging the storage battery is planned with the control plan, determine whether a power selling price of surplus electricity is higher than a power purchase price of supply power supplied to the consumer, the surplus electricity being generated according to a difference between the amount of power generation and the amount of power consumption, and
a second control device configured to, when the second determining device determines that the power selling price is higher than the power purchase price, perform control so that the storage battery is neither charged nor discharged regardless of the control plan.

3. The charge/discharge control device according to claim 2, wherein
the first control device further includes

a third determining device configured to, when the second determining device determines that the power selling price is lower than the power purchase price, determine whether the power selling price is higher than an accumulation price, the accumulation price corresponding to the power purchase price accumulated to charge the storage battery, and
a third control device configured to, when the third determining device determines that the power selling price is higher than the accumulation price, perform control so that the storage battery is neither charged nor discharged regardless of the control plan.

4. The charge/discharge control device according to claim 1, wherein:

the control of the storage battery is planned in advance with a control plan, and
the first control device includes

a second determining device configured to, when charging the storage battery is planned with the control plan, determine whether a power purchase price of supply power supplied to the consumer is higher than a power selling price of surplus electricity, the surplus electricity being generated according to a difference between the amount of power generation and the amount of power consumption, and
a second control device configured to, when the second determining device determines that the power purchase price is higher than the power selling price, perform control so that the storage battery is charged based on the control plan.

5. The charge/discharge control device according to claim 4, wherein
the first control device further includes

a third determining device configured to, when the second determining device determines that the power purchase price is lower than the power selling price, determine whether the power selling price is higher than an accumulation price, the accumulation price corresponding to the power purchase price accumulated to charge the storage battery, and
a third control device configured to, when the third determining device determines that the power selling price is lower than the accumulation price, perform control so that the storage battery is charged based on the control plan.

6. The charge/discharge control device according to claim 1, wherein:

the control of the storage battery is planned in advance with a control plan, and
the first control device includes

a second determining device configured to, when discharging the storage battery is planned with the control plan, determine whether an economic benefit is brought to the consumer by charging the storage battery,

a second control device configured to, when the second determining device determines that the economic benefit is brought to the consumer, perform control so that the storage battery is charged regardless of the control plan, and
a third control device configured to, when the second determining device determines that the economic benefit is not brought to the consumer, perform control so that the storage battery is neither charged nor discharged regardless of the control plan.

7. The charge/discharge control device according to claim 6, wherein
the second determining device is configured to, when a price according to the power selling price of surplus electricity is lower than an accumulation price, determine that the economic benefit is brought to the consumer, the surplus electricity being generated according to a difference between the amount of power generation and the amount of power consumption, the accumulation price corresponding to a power purchase price, accumulated to charge the storage battery, of supply power supplied to the consumer, and

the second determining device is configured to, when a price according to the power selling price is higher than the accumulation price, determine that the economic benefit is not brought to the consumer.

8.  The charge/discharge control device according to claim 1, wherein
the control of the storage battery is planned in advance with a control plan, and
the first control device includes

    a second determining device configured to, when charging the storage battery is planned with the control plan, determine whether the economic benefit is brought to the consumer by neither charging nor discharging the storage battery,
    a second control device configured to, when the second determining device determines that the economic benefit is brought to the consumer, perform control so that the storage battery is neither charged nor discharged regardless of the control plan, and
    a third control device configured to, when the second determining device determines that the economic benefit is not brought to the consumer, perform control so that the storage battery is charged based on the control plan.

9.  The charge/discharge control device according to claim 8, wherein
the second determining device is configured to, when a power selling price of the surplus electricity is higher than a price according to an accumulation price, determine that the economic benefit is brought to the consumer, the surplus electricity being generated according to a difference between the amount of power generation and the amount of power consumption , the accumulation price corresponding to a power purchase price, accumulated to charge the storage battery, of supply power, supplied to the consumer, and
the second determining device is configured to, when the power selling price is lower than the price according to the accumulation price, determine that the economic benefit is not brought to the consumer.

10. A program causing a charge/discharge control device configured to control charge and discharge of a storage battery in a consumer, the consumer including an electric power load, a distributed power supply, and the storage battery, the distributed power supply being configured to supply the electric power load with electric power, the storage battery being coupled to the electric power load and the distributed power supply, the program causing the charge/discharge control device to realize:

    a first function of determining whether an amount of power generation of the distributed power supply is larger than an amount of power consumption of the electric power load; and
    a second function of controlling charge and discharge of the storage battery so that an economic benefit is brought to the consumer by control of the storage battery, when the first function determines that the amount of power generation is larger than the amount of power consumption.

FIG. 1

CHARGE/DISCHARGE CONTROL DEVICE

CPU `31`

COMMUNICATION DEVICE `32`

STORAGE DEVICE `33`

DISPLAY DEVICE `34`

INPUT DEVICE `35`

`3`

`300`

FIG. 2

3,3B

CHARGE/DISCHARGE CONTROL DEVICE

36,36 B

PLANNING UNIT

37

SURPLUS DETERMINING UNIT

38

ECONOMIC EFFICIENCY DETERMINING UNIT

39

ACCUMULATED UNIT PRICE CALCULATING UNIT

40,40B

CONTROL UNIT

FIG. 3

FIG. 4

| TIME SLOT | ELECTRIC POWER PRICE (YEN/kWh) | PV PURCHASE PRICE (YEN/kWh) |
|---|---|---|
| B1 (00:00 TO 01:00) | A1 | E1 |
| B2 (01:00 TO 02:00) | A2 | E2 |
| B3 (02:00 TO 03:00) | A3 | E3 |
| B4 (03:00 TO 04:00) | A4 | E4 |
| B5 (04:00 TO 05:00) | A5 | E5 |
| B6 (05:00 TO 06:00) | A6 | E6 |
| B7 (06:00 TO 07:00) | A7 | E7 |
| B8 (07:00 TO 08:00) | A8 | E8 |
| B9 (08:00 TO 09:00) | A9 | E9 |
| B10 (09:00 TO 10:00) | A10 | E10 |
| B11 (10:00 TO 11:00) | A11 | E11 |
| B12 (11:00 TO 12:00) | A12 | E12 |
| B13 (12:00 TO 13:00) | A13 | E13 |
| B14 (13:00 TO 14:00) | A14 | E14 |
| B15 (14:00 TO 15:00) | A15 | E15 |
| B16 (15:00 TO 16:00) | A16 | E16 |
| B17 (16:00 TO 17:00) | A17 | E17 |
| B18 (17:00 TO 18:00) | A18 | E18 |
| B19 (18:00 TO 19:00) | A19 | E19 |
| B20 (19:00 TO 20:00) | A20 | E20 |
| B20 (19:00 TO 20:00) | A21 | E21 |
| B22 (21:00 TO 22:00) | A22 | E22 |
| B23 (22:00 TO 23:00) | A23 | E23 |
| B24 (23:00 TO 24:00) | A24 | E24 |

T1

FIG. 5

T2

| ORDER OF SELECTION (VALUE OF VARIABLE K) | TIME SLOT | ELECTRIC POWER PRICE (YEN/kWh) |
|---|---|---|
| 1 | B10 (09:00 TO 10:00) | A10 |
| 2 | B11 (10:00 TO 11:00) | A11 |
| 3 | B12 (11:00 TO 12:00) | A12 |
| 4 | B20 (19:00 TO 20:00) | A20 |
| 5 | B21 (20:00 TO 21:00) | A21 |
| 6 | B22 (21:00 TO 22:00) | A22 |
| 7 | B23 (22:00 TO 23:00) | A23 |
| 8 | B24 (23:00 TO 24:00) | A24 |
| 9 | B1 (00:00 TO 01:00) | A1 |
| 10 | B13 (12:00 TO 13:00) | A13 |
| 11 | B19 (18:00 TO 19:00) | A19 |
| 12 | B9 (08:00 TO 09:00) | A9 |
| 12 | B2 (01:00 TO 02:00) | A2 |
| 11 | B3 (02:00 TO 03:00) | A3 |
| 10 | B8 (07:00 TO 08:00) | A8 |
| 9 | B18 (17:00 TO 18:00) | A18 |
| 8 | B14 (13:00 TO 14:00) | A14 |
| 7 | B15 (14:00 TO 15:00) | A15 |
| 6 | B16 (15:00 TO 16:00) | A16 |
| 5 | B17 (16:00 TO 17:00) | A17 |
| 4 | B4 (03:00 TO 04:00) | A4 |
| 3 | B5 (04:00 TO 05:00) | A5 |
| 2 | B7 (06:00 TO 07:00) | A7 |
| 1 | B6 (05:00 TO 06:00) | A6 |

FIG. 6

| TIME SLOT | ELECTRIC POWER PRICE (YEN/kWh) | CONTROL |
|---|---|---|
| B1 (00:00 TO 01:00) | A1 | |
| B2 (01:00 TO 02:00) | A2 | STOP |
| B3 (02:00 TO 03:00) | A3 | |
| B4 (03:00 TO 04:00) | A4 | |
| B5 (04:00 TO 05:00) | A5 | |
| B6 (05:00 TO 06:00) | A6 | |
| B7 (06:00 TO 07:00) | A7 | DISCHARGE |
| B8 (07:00 TO 08:00) | A8 | |
| B9 (08:00 TO 09:00) | A9 | STOP |
| B10 (09:00 TO 10:00) | A10 | CHARGE |
| B11 (10:00 TO 11:00) | A11 | |
| B12 (11:00 TO 12:00) | A12 | CHARGE |
| B13 (12:00 TO 13:00) | A13 | |
| B14 (13:00 TO 14:00) | A14 | |
| B15 (14:00 TO 15:00) | A15 | DISCHARGE |
| B16 (15:00 TO 16:00) | A16 | |
| B17 (16:00 TO 17:00) | A17 | |
| B18 (17:00 TO 18:00) | A18 | |
| B19 (18:00 TO 19:00) | A19 | |
| B20 (19:00 TO 20:00) | A20 | |
| B21 (20:00 TO 21:00) | A21 | |
| B22 (21:00 TO 22:00) | A22 | |
| B23 (22:00 TO 23:00) | A23 | |
| B24 (23:00 TO 24:00) | A24 | |

T3

FIG. 7

START

S11
OBTAIN PRICE INFORMATION

S12
REARRANGEMENT

S13
K=1

S14
CHARGE/DISCHARGE PRICE RATIO $(C_k/C_{24-(k-1)}) <$ CHARGE/DISCHARGE EFFICIENCY OF ELECTRICITY STORAGE SYSTEM — NO

YES

S15
TIME SLOT $B_k$: SET TO CHARGE
TIME SLOT $B_{24-(k-1)}$: SET TO DISCHARGE

S17
SET SUCH THAT NEITHER CHARGE NOR DISCHARGE IS PERFORMED IN BOTH TIME SLOTS $B_k$ AND $B_{24-(K-1)}$

S16
K=12 — NO

YES

S18
K=K+1

END

FIG. 8

STORAGE BATTERY 12

CHARGING ELECTRIC ENERGY Wt

CHARGING CAPACITY Wc

DISCHARGEABLE ELECTRIC ENERGY S
= REMAINING ACCUMULATED ELECTRIC ENERGY Wb × DISCHARGE EFFICIENCY q
= CHARGING ELECTRIC ENERGY Wt × CHARGE EFFICIENCY p × DISCHARGE EFFICIENCY q

REMAINING ACCUMULATED ELECTRIC ENERGY Wb

FIG. 9

EP 3 082 211 A1

| STATE OF CONSUMER | CONTROL PLAN | PV SURPLUS | ECONOMIC EFFICIENCY | CONTROL | EXAMPLE OF ADVANTAGE |
|---|---|---|---|---|---|
| FIRST STATE | CHARGE | YES | ECONOMIC ADVANTAGE IS BROUGHT BY STOPPING CHARGE AND DISCHARGE | STOP CHARGING AND DISCHARGING | INCREASE IN AMOUNT OF MONEY FOR PV PURCHASE |
| SECOND STATE | CHARGE | YES | ECONOMIC ADVANTAGE IS NOT BROUGHT BY STOPPING CHARGE AND DISCHARGE | AS PLANNED | |
| THIRD STATE | CHARGE | NO | | AS PLANNED | |
| FOURTH STATE | DISCHARGE | YES | ECONOMIC ADVANTAGE IS BROUGHT BY CHARGING | CHARGE | PREVENTION OF DOUBLE POWER GENERATION REDUCTION IN ACCUMULATED CHARGING UNIT PRICE X |
| FIFTH STATE | DISCHARGE | YES | ECONOMIC ADVANTAGE IS NOT BROUGHT BY CHARGING | STOP CHARGING AND DISCHARGING | PREVENTION OF DOUBLE POWER GENERATION |
| SIXTH STATE | DISCHARGE | NO | | AS PLANNED | |

FIG. 10

EP 3 082 211 A1

START

READ FINAL ACCUMULATED CHARGING UNIT PRICE X, DISCHARGEABLE
ELECTRIC ENERGY S, AND THE LIKE OF PREVIOUS DAY — S21

CHARGE — DETERMINE TIME SLOT — DISCHARGE — S22

STOP

S23 — ELECTRIC POWER PRICE At <
ACCUMULATED CHARGING
UNIT PRICE X
YES / NO

S24 — PRICE ACCORDING TO ELECTRIC POWER PRICE
< ACCUMULATED CHARGING UNIT PRICE
YES / NO

S25 — ELECTRIC POWER PRICE >
SUM OF ACCUMULATED CHARGING UNIT PRICE X
AND PREDETERMINED UNIT PRICE
YES / NO

S31 — IS PV SURPLUS GENERATED?
YES / NO

S41 — IS PV SURPLUS GENERATED?
YES / NO

S32 — PV PURCHASE PRICE Et <
ELECTRIC POWER PRICE At
YES / NO

S42 — PV PURCHASE PRICE Et <
ELECTRIC POWER PRICE At
NO / YES

S33 — PV PURCHASE PRICE Et <
ACCUMULATED CHARGING UNIT PRICE X
YES / NO

S43 — PV PURCHASE PRICE Et <
ACCUMULATED CHARGING UNIT PRICE X
NO / YES

S34 — PV PURCHASE PRICE Et >
ACCUMULATED CHARGING UNIT PRICE X
+ PREDETERMINED UNIT PRICE
NO / YES

S44 — PRICE ACCORDING TO PV PURCHASE
PRICE Et < ACCUMULATED CHARGING
UNIT PRICE X
NO / YES

S35 — CHARGE WITHIN
RANGE OF CONTRACTED
ELECTRIC POWER

S26 — STOP CHARGING
AND DISCHARGING

S45 — CHARGE WITH PV SURPLUS

S55 — DISCHARGE WITHIN
RANGE OF NOT CAUSING
ADVERSE CURRENT

S36 — INTEGRATE CHARGING
ELECTRIC ENERGY Wt

S46 — INTEGRATE CHARGING
ELECTRIC ENERGY Wt

S56 — INTEGRATE DISCHARGING
ELECTRIC ENERGY Pt

S37 — CALCULATE DISCHARGEABLE
ELECTRIC ENERGY S

S47 — CALCULATE DISCHARGEABLE
ELECTRIC ENERGY S

S57 — CALCULATE DISCHARGEABLE
ELECTRIC ENERGY S

S38 — CALCULATE ACCUMULATED
CHARGING UNIT PRICE X

S48 — CALCULATE ACCUMULATED
CHARGING UNIT PRICE X

S58 — CONTROL HAS BEEN PERFORMED
IN ALL TIME SLOTS?
NO / YES

END

FIG. 11

FIG. 12

START

READ FINAL ACCUMULATED CHARGING UNIT PRICE X AND
DISCHARGEABLE ELECTRIC ENERGY S OF PREVIOUS DAY — S21

CHARGE     DETERMINE TIME SLOT     DISCHARGE — S22

STOP

ELECTRIC POWER PRICE At <
ACCUMULATED CHARGING
UNIT PRICE X — S23

YES      NO

PRICE ACCORDING TO ELECTRIC POWER PRICE
< ACCUMULATED CHARGING UNIT PRICE — S24

ELECTRIC POWER PRICE >
SUM OF ACCUMULATED CHARGING UNIT
PRICE X AND PREDETERMINED UNIT PRICE — S25

YES      NO      NO      YES

IS PV SURPLUS GENERATED? — S61     YES     YES     IS PV SURPLUS GENERATED? — S62

NO      NO

CHARGE WITHIN RANGE
OF CONTRACTED
ELECTRIC POWER — S35

STOP CHARGING
AND DISCHARGING — S26

DISCHARGE WITHIN
RANGE OF NOT CAUSING
ADVERSE CURRENT — S55

INTEGRATE CHARGING
ELECTRIC ENERGY Wt — S36

INTEGRATE DISCHARGING
ELECTRIC ENERGY Pt — S56

CALCULATE DISCHARGEABLE
ELECTRIC ENERGY S — S37

CALCULATE DISCHARGEABLE
ELECTRIC ENERGY S — S57

CALCULATE ACCUMULATED
CHARGING UNIT PRICE X — S38

NO     CONTROL HAS BEEN PERFORMED
IN ALL TIME SLOTS? — S58

YES

END

FIG. 13

## INTERNATIONAL SEARCH REPORT

| International application No. |
| --- |
| PCT/JP2013/083073 |

**A. CLASSIFICATION OF SUBJECT MATTER**
*H02J3/32(2006.01)i, H02J3/38(2006.01)i, H02J7/35(2006.01)i*

According to International Patent Classification (IPC) or to both national classification and IPC

**B. FIELDS SEARCHED**

Minimum documentation searched (classification system followed by classification symbols)
H02J3/32, H02J3/38, H02J7/35

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2003-189477 A  (Daikin Industries, Ltd.),<br>04 July 2003 (04.07.2003),<br>entire text; all drawings<br>(Family: none) | 1,10<br>2-9 |
| X<br>Y | JP 2010-213468 A  (Toshiba Toko Meter Systems Co., Ltd.),<br>24 September 2010 (24.09.2010),<br>paragraphs [0032] to [0035]; fig. 1<br>(Family: none) | 1,10<br>2-9 |
| Y | JP 2005-143218 A  (Nippon Telegraph and Telephone Corp.),<br>02 June 2005 (02.06.2005),<br>entire text; all drawings<br>(Family: none) | 2-9 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   10 February, 2014 (10.02.14) | Date of mailing of the international search report<br>   18 February, 2014 (18.02.14) |
| --- | --- |
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/083073

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2011/039610 A1 (Panasonic Electric Works Co., Ltd.), 07 April 2011 (07.04.2011), entire text; all drawings & JP 2011-78238 A    & US 2012/0233094 A1 & EP 2485189 A1    & CN 102612701 A | 1-10 |
| A | WO 2012/091113 A1 (Panasonic Corp.), 05 July 2012 (05.07.2012), entire text; all drawings & JP 2012-152093 A    & CN 103283107 A | 1-10 |
| A | JP 5-304727 A (Reem Properties B.V.), 16 November 1993 (16.11.1993), entire text; all drawings (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011244682 A